(19) Europäisches Patentamt / European Patent Office / Office européen des brevets

(11) **EP 4 575 854 A1**

(12) **EUROPEAN PATENT APPLICATION**


(43) Date of publication:
**25.06.2025 Bulletin 2025/26**

(21) Application number: **23383346.6**

(22) Date of filing: **21.12.2023**

(51) International Patent Classification (IPC):
***G06F 21/53*** $^{(2013.01)}$ ***G06F 21/55*** $^{(2013.01)}$
***H04L 9/00*** $^{(2022.01)}$

(52) Cooperative Patent Classification (CPC):
**G06F 21/53; G06F 21/552; G06F 21/556; H04L 9/002; H04L 9/0894**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**



(71) Applicant: **Telefónica Innovación Digital, S.L.**
**28011 Madrid (ES)**

(72) Inventors:
- **MARIN, Eduard**
  **28011 MADRID (ES)**
- **KOURTELLIS, Nicolas**
  **28011 MADRID (ES)**
- **PERINO, Diego**
  **28011 MADRID (ES)**

(74) Representative: **Herrero & Asociados, S.L.**
**Edificio Aqua - Agustín de Foxá, 4-10**
**28036 Madrid (ES)**


(54) **SIDE-CHANNEL ATTACKS AGAINST CONFIDENTIAL CONTAINERS**


(57) Method for performing side-channel attacks that permit a user to extract sensitive information of applications running in confidential containers backed by a trusted execution environment, TEE, wherein the confidential containers share the same kernel in an operating system, the method comprising collecting container images from a container image repository by leveraging the container image repository, wherein each container images comprises layers, extracting the layers from each of a container image, storing the extracted layers in a file, capturing invoked application system calls from outside the confidential container and application system calls generated by parent process and children processes within the confidential containers, processing the captured application system calls to extract valuable fields to obtain at least two features vectors, matching system calls to the applications producing said system calls in the confidential container by using the at least two features vectors obtained, performing a feature importance analysis to identify features of the two features vectors to be provided to a machine learning, ML model, providing the ML model with a set of system calls obtained from the identified features, wherein the set of system calls is associated with a victim container, identifying which container images belong to the victim container with the ML model and performing a side-channel attack to the victim container using the identified container images.


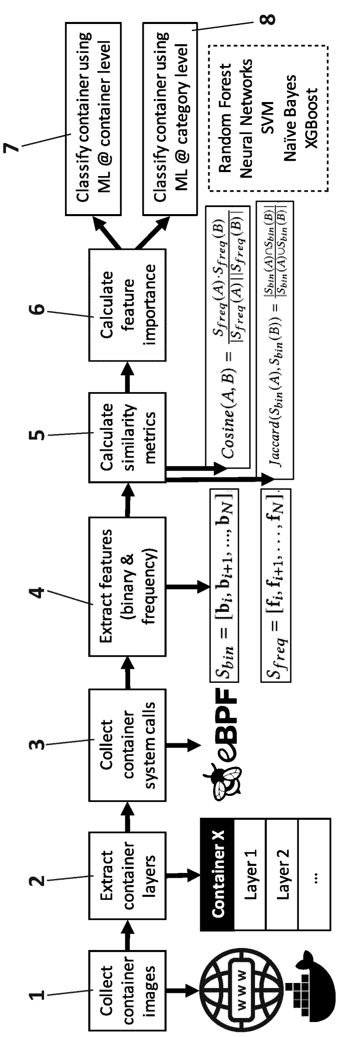


FIG. 2

EP 4 575 854 A1

## Description

### Object of the invention

The present invention refers to a method for extracting sensitive information of applications running in confidential containers (i.e., containers that are run with very high security and privacy guarantees protected by a trusted execution environment (TEE), wherein the (preferably confidential) containers share the same kernel in an operating system.

In particular, the proposed method leverages information leakage in the container-host OS kernel interface to discover sensitive information about the applications executed within confidential containers.

### Background of the invention

In recent years, numerous publications have been proposing novel side channel attacks targeting cloud environments. These attacks leverage various channels, each capable of revealing varying levels of granular information at different speeds (depending on the channel's noise characteristics). For example, X. Gao, Z. Gu, M. Kayaalp, D. E. Pendarakis, and H. Wang, "ContainerLeaks: Emerging Security Threats of Information Leakages in Container Clouds," Annual IEEE/IFIP International Conference on Dependable Systems and Networks (DSN), pp. 237-248, 2017, investigated potential in-container leakage channels that could reveal host-system state (e.g., power consumption, performance data, global kernel data, and asynchronous kernel events) and individual process execution information (e.g., process scheduling, cgroups, and process running status). Another example is the publication by L. Wang, M. Li, Y. Zhang, T. Ristenpart, and M. Swift, "Peeking Behind the Curtains of Serverless Platforms," in USENIX Annual Technical Conference (USENIX ATC), 2018, pp. 133-146., which introduced a heuristic for identifying the virtual machine (VM) hosting serverless functions based on the VM uptime extracted from /proc/stat.

### Description of the invention

In the attacks mentioned above, adversaries leverage the information exposed by the container to discern its execution environment or the underlying host. The present invention challenges the promise behind confidential computing which dictates that no adversary (including the cloud provider) should be able to obtain any information about applications running within trusted execution environment (TEEs). More specifically, in the present invention the proposed method leverages information leakage in the container-host OS kernel interface to discover sensitive information about the applications running inside confidential containers.

Until recently, cloud providers have relied on a security model that focuses on keeping their customers' applications encrypted at rest and in transit, but not while in use. Unfortunately, this security model falls short for many of the applications running in the cloud today. This is because every time the code and data of an application are decrypted and moved in clear-text from secondary storage to system memory for use, they are at serious risk of being accessed or manipulated by vulnerable or malicious software at the system level (e.g., the operating system, hypervisor or the BIOS), or by a malicious cloud operator with administrator or physical access to the cloud provider's infrastructure. In response to this threat, confidential computing has emerged to protect the customers' applications not only at rest and in transit, but also while in use. Since then, major cloud providers have begun to include confidential computing as part of their infrastructure offerings, in order to provide greater security and privacy guarantees to their customers.

At the core of trusted computing are Trusted Execution Environments (TEEs), which allow storing data and executing arbitrary code in a secure memory area (also known as enclave) on an untrusted server. Importantly, TEEs allow to significantly reduce the Trusted Computing Base (TCB) and provide strong protection even against attacks from adversaries who have root privileges on the server. Leveraging TEEs, confidential computing allows customers to run their applications inside containers as usual, but without cloud providers (or any compromised or malicious software in their servers) being able to infer any information about the currently running applications. Indeed, failure to deliver on this promise would jeopardise the widespread adoption of confidential computing among software developers and enterprises.

Numerous attacks against TEEs have been discovered in recent years, of which side-channel attacks stand out as particularly prevalent. These side-channel attacks can be classified into four groups:

(i) page-table attacks
(ii) cache attacks
(iii) DRAM attacks and
(iv) predictors

The existence of these side-channel attacks can be attributed to multiple factors. One prominent reason is that they were not given enough attention during the design of current TEEs and were left out of the standard TEE threat model. Another contributing factor is that the responsibility for mitigating certain side-channel attacks falls upon the application owner, further exacerbating their prevalence. As a result, one can anticipate that there are side channel attacks yet to be discovered.

The present invention proposes a new side-channel attack targeting confidential computing that enables adversaries to discover sensitive information about an application running inside a container backed by a TEE, by leveraging its interactions with the "outside world".

As shown in Figure 1, containers can interact with the outside world mainly in two ways:

Reference (X1) refers to container interaction over the network with other containers and cloud services, and,
Reference (X2) refers to container interaction with the host OS kernel.

In the former case (X1), the information exchanged is usually encrypted. While traffic analysis attacks that exploit any information that is preserved when traffic is encrypted are possible (e.g., using the packet length or the number of packets exchanged in each direction), these attacks have already been studied in previous publications both for TEEs, and other domains. Yet, the container-kernel interface - which is particularly relevant in the context of containers - remains unexplored. The present invention targets this interface and is motivated by the fact that system calls sent via this interface could constitute a unique application fingerprint. Such knowledge could then be used by adversaries to launch more effective, efficient and stealthy attacks. Moreover, it could allow adversaries to detect co-location, an important prerequisite to mount a wide range of attacks.

More specifically, the present invention relates to a method and system configured to detect and quantify information leakage arising at the container-kernel interface in the context of confidential computing. The present invention proposes a fingerprinting attack that allows adversaries to infer sensitive information about containerised applications running inside a TEE solely by observing the system calls they invoke.

A key enabler for this new class of attack is that the system calls invoked by containerised applications running inside the TEE can be captured accurately from outside the container without affecting the container's performance, thus, leaving no trace from the adversary. The present invention then goes one step further and analyses the feasibility of these attacks from the perspective of a "weak adversary" who can only monitor the container for the first 2 minutes from the time the container is started (i.e., its booting time).

The present invention provides the following advantages:

(i) Uncovering a new attack vector in confidential computing, which allows an adversary to infer what applications are running inside confidential containers solely by analysing the system calls they invoke.
(ii) Collecting a large set of system call data from 149 official container images in a (optionally public) container repository and systematically evaluate the feasibility of the fingerprinting attacks.

The present invention builds on the key observation that many TEEs require applications to leave the enclave to handle the system calls they invoke.

With confidential computing it should not be possible for adversaries to obtain any information whatsoever about the applications running inside confidential containers. This includes information such as what application is running within the TEE, what type of application it is (e.g., if it is a database or one that performs security checks), or which version of the application is used. It is worth noting that all of this information is considered sensitive in the context of confidential computing, since it could give adversaries valuable information for them to perform security attacks more efficiently, effectively, and stealthily. For example, if adversaries can discover that a confidential container implements a container image, they can design more targeted attacks, by taking advantage of known weaknesses and attacks commonly used against this type of database. Knowing the version of the application within the confidential container can further help adversaries choose which attack is most effective and efficient - especially in the case where there are known vulnerabilities against specific versions of the application.

The present invention considers a cloud environment that offers confidential computing services to their customers. Container applications are protected using the standard container security mechanisms, and are additionally executed inside a TEE to achieve even stronger security and privacy guarantees. This allows application owners to upload the (encrypted) application directly into the TEE, after successfully attesting and establishing a shared key with the TEE (not known to the cloud providers). Here, it is adopted the standard TEE adversary model, which considers adversaries who have root privileges, and hence full control over all software running outside of the TEE's hardware-protected memory region, including privileged software such as the operating system, BIOS or hypervisor.

The goal of the adversary is to discover sensitive information about applications running inside confidential containers solely from the information sent through the container-kernel interface. Adversaries view the confidential container (i.e., the victim) as a black box, and hence cannot distinguish between processes running inside the TEE or associate system calls with the processes from which they originate. The only information available to them is the list of system calls invoked by the confidential container, namely what we use for our attack. To carry out their attack, the adversary first builds an ML model offline using information they gather from container images they own or find in public repositories. As the most popular TEEs are open sourced, and the information about which TEE is used by each cloud provider is public, adversaries can easily recreate and study any of the expected environments. At runtime, the adversary captures system calls invoked by a confidential container (the victim). Then, the adversary uses the previously trained ML model to infer sensitive information about the containerised application such as type, and even version. This type of attack can be carried out by the cloud providers themselves, or by malicious tenants who manage to escape the container and gain control of the underlying host. In the latter case, after carrying out the attack, the adversary has the same privileges as the cloud provider on that host.

The main technical challenges to be overcome to perform fingerprinting attacks against applications running inside confidential containers are shown below:

**Challenge A: How to capture the application's system calls.**

Containers have their own namespace. Thus, the visibility of the processes and their numbering are different inside and outside the container. Also, containers run applications that can spawn multiple processes during their execution. Here, the challenge is how to identify and monitor both the parent process of the container as well as all children processes spawned within the container in order to capture all system calls invoked by the application. It should be noted that this must be done transparently from the host side, i.e., without having to modify the application, the container runtime or the TEE. In addition, the proposed method must be able to group the system calls of each container together since there can be more than one container running on the server at the same time.

**Challenge B: How to distinguish between application system call patterns.**

Once the system calls have been captured, the second challenge is how to accurately associate the system call patterns to a container image. This can be a challenging task for a number of reasons. Firstly, container images are made up of layers, many of which are shared with many container images. In fact, it is common for software developers to download container images from public repositories and use them as a starting point to build their own applications. Secondly, some container images require other containers to be created to work correctly, e.g., a database container to store the data they handle. These factors make it more difficult to distinguish container images solely from their system call patterns.

**Challenge C: How to perform these attacks in practice.**

After clearing the first two challenges, adversaries must think about how best to carry out their attacks in practice. The third challenge is related to this - more specifically on how to perform these fingerprinting attacks in an efficient, effective and stealthy manner. On the one hand, due to the large number of containers running in the cloud simultaneously, it would be undesirable for adversaries to have to monitor each containerised application for a long time in order to carry out the attack successfully. It is important to note that the goal of adversaries is always to conduct attacks that cause significant damage, while minimising the cost of mounting them. On the other hand, adversaries must develop their fingerprinting attacks by taking advantage of container information that is stable and that cannot be easily hidden by application owners.

In a first aspect, the invention relates to a method to extract sensitive information of applications running in victims confidential containers backed by a trusted In a first aspect, the invention relates to a method to extract sensitive information of applications running in victims confidential containers backed by a trusted execution environment, TEE, the method performed by an adversary and comprising in an offline phase building a machine learning, ML model by collecting container images from one or more container repositories or by using container images owned by the adversary. The method further comprises, in an online phase, capturing invoked application system calls from outside the confidential container and application system calls generated by parent process and children processes within the victim confidential containers, processing the captured invoked application system calls to extract valuable fields to obtain two features vectors, matching system calls to the applications producing said system calls in the victim confidential container by using the two features vectors obtained, performing a feature importance analysis to identify features of the two features vectors to be provided to a machine learning, ML model, providing the ML model with a set of system calls obtained from the identified features, wherein the set of system calls is associated with a victim confidential container, identifying which container images belong to the victim confidential container with the ML model; and performing a side-channel attack to the victim confidential container using the identified container images to extract sensitive information of applications running in the victim containers.

Hence, the claimed method encompasses an offline (before the attack) and an online (during the attack) phase. In the offline phase, the goal of the adversary is to build an ML model using container images the adversary owns, or the ones the adversary can find in public repositories (i.e., this is done with *container images known by the adversary*). Put differently, the goal of the adversary here is to gather the necessary knowledge to be able to distinguish between different images solely from the system calls invoked.

Once this is done, the online phase starts: The adversary first collects the system calls invoked by an (unknown) application running inside a confidential container. The adversary's goal is to infer which application belongs to the system calls invoked. To that end the system calls are collected to create the system call vectors and then to feed this information to the ML model previously built. This allows the adversary to know to which container image the system calls vectors belong to.

In one example, the step of providing to the ML model with a set of system calls comprises initially training offline the ML model with training images from other container image repositories.

execution environment, TEE, the method performed by an adversary and comprising in an offline phase building a machine learning, ML model by collecting container images from one or more container repositories or by using container images owned by the adversary. The method further comprises, in an online phase, capturing invoked application system calls from outside the confidential container and application system calls generated by parent process and children processes within the victim confidential containers, processing the captured invoked application system calls to extract valuable fields to obtain two features vectors, matching system calls to the applications producing said system calls in the victim confidential container by using the two features vectors obtained, performing a feature importance analysis to identify features of the two features vectors to be provided to a machine learning, ML model, providing the ML model with a set of system calls obtained from the identified features, wherein the set of system calls is associated with a victim confidential container, identifying which container images belong to the victim confidential container with the ML model; and performing a side-channel attack to the victim confidential container using the identified container images to extract sensitive information of applications running in the victim containers.

In one example, the step of providing to the ML model with a set of system calls comprises initially training offline the ML model with training images from other container image repositories.

In one example, the step of providing the ML with a set of system calls obtained from the two features vectors comprises using an ML classifier such as a Random Forest, Neural Network, Support Vector Machine, Naive Bayes or XGBoost;

In one example, the step of performing a feature importance analysis comprise using Random Forest (RF) classifier with 100 trees, with tree depth in the range [11, 22] and number of features per tree in the range [110, 117] over two subsets of confidential containers wherein a first subset comprises 70% for training of confidential containers and the second subset comprises 30% for testing purposes of confidential containers.

In one example, a first feature of the two features vectors comprise a vector *Sbin* of binary values related to the presence of different types of system calls within the confidential container trace, such that *Sbin* = [b*i*, *bi*+1, ..., b*N*], wherein N is the total number of system calls available in the kernel shared by the victims confidential containers,

In one example, a second feature of the two features vectors comprise a second vector *Sfreq* related to the number of times each system call appears in the confidential container trace, such that *Sfreq* = [f*i*, f*i*+1, ... , f*N* ].

In one example, the step of matching system calls to the applications comprises using Jaccard and Cosine similarity metrics. In particular, the method comprises using the *Sbin* for Jaccard similarity between container traces A and B, such that:

$$Jaccard(S_{bin}(A), S_{bin}(B)) = \frac{|S_{bin}(A) \cap S_{bin}(B)|}{|S_{bin}(A) \cup S_{bin}(B)|}.$$

and using the *Sfreq* for Cosine similarity between the container traces A and B, such that:

$$Cosine(A, B) = \frac{S_{freq}(A) \cdot S_{freq}(B)}{|S_{freq}(A)||S_{freq}(B)|}.$$

wherein the obtained similarity using Jaccard or Cosine can take a value in the range of [0,1], where 0 indicates that the container traces A and B are completely different, and 1 that the two sets are equal.

In one example, the container repository comprises four types of repositories including official, verified publisher, sponsored OSS and community and the step of collecting container images comprises collecting images from an official repository.

In one example, collecting container images comprises for each image retrieving its name, description, class, operating systems and architectures where it can be used, a command to execute it a command to download and produce a compressed folder for each of the collecting container images.

In one example, the method comprises using the sensitive information for the detection of co-location used for launching attacks, for executing more efficient, effective, and stealthy attacks.

Another aspect of the present invention refers to a system that comprises a memory configured to store instructions that when executed perform the method according to the first aspect and processing mean configured to execute said method.

Computer readable medium storing instructions that when executed perform the method according to the first aspect.

## Brief description of the drawings

For a better understanding of the above explanation and for the sole purpose of providing an example, some non-limiting drawings are included that schematically depict a practical embodiment.

Figure 1 shows types of interactions of containers.

Figure 2 represents an example of a method for a user to identify, quantify and mitigate information leakage in the container-kernel interface.

## Detailed description of the drawings

The proposed procedure shown in Figure 2, encompasses all the steps a user must follow to identify, quantify and mitigate information leakage in the container-kernel interface.

**Box (1) refers to crawling container images in** public repository.

To investigate the feasibility of the proposed attack, a large number of container images pulled from a public repository are used, from the largest and most popular public repository for container images today. As a first step, it is implemented a custom web scraper to collect the information needed to run container repository images by leveraging the container repository. In the container repository, there are four types of repositories including official, verified publisher, sponsored OSS and community. The present invention focuses on official repositories, as they contain the most popular container images that remain available on the container repository for longer. For each of the official container images in the container repository, it is retrieved its name, description, class (e.g., if it is a database), the operating systems and architectures where it can be used, and the "container run" command to execute it. Given the large size of container images, the "container pull" command is run, followed by the "container save" command in order to download and produce a compressed folder for each of the container images.

**Box (2) refers to collecting container system calls.**

A monitoring agent is developed that allows to capture all invoked application system calls from outside the container without negatively affecting the container's performance. Without loss of generality, it is described the process for capturing system calls generated inside containers. However, note that this process can also be applied similarly when other sandboxes are used. With container, it can be seen that there is a process called "container -containerd" that is always running and is associated with the container daemon. Every time a container is started, a child process "container -containerd-shim" is created that becomes the parent process for all processes that are later spawned within the container. The monitoring agent awaits to detect the occurrence of a "container -containerd-shim" process, then captures all system calls sent by this and any child processes originating from it, thus addressing challenge A.

The monitoring agent is based on extended Berkeley Packet Filter (eBPF), a technology that allows to run programs in kernel space inside isolated virtual machines without the need to change (and recompile) the kernel source code or add additional modules to it. The monitoring agent captures all system calls that occur during the first 2 minutes from the time the container is created. By doing so, it is impossible for a user to study the feasibility of these attacks given a weak adversary who can only monitor the container for a short period of time (satisfying challenge C). It is worth noting that containers send a large number of system calls during their first 2 minutes.

The monitoring agent then returns a JSON file with as many lines as system calls are observed during this container monitoring phase. For each system call observed, it is collected information such as the timestamp, processId, threadId, parentProcessId, hostProcessId, hostThreadId, hostParentProcessId, userId, MountNamespace, pidNamespace, processName, hostName, containerId, eventId, eventName, argsNum, returnValue, stack-Addresses and args. Finally, each of the containers is run several times, while collecting all the system calls invoked by the applications running inside them, allowing us to get multiple traces per container.

**Box (3) refers to extracting features.**

Following the collection of application system calls, the data collected is further processed with the aim of extracting valuable fields from which suitable features can be derived. This involves the eventName, processName, and timestamp fields, which give us information about the invoked system call, the process it came from, and the time it occurred, respectively.

Subsequently, two types of system calls features are proposed and analysed. In the first type, the presence (or not) of the different types of system calls is reflected within the container trace, while in the second type, the number of times each system calls appears in the container trace is count. In both cases, it is started by creating a system call vector of size *N,* where each element of the vector corresponds to a specific type of system call and *N,* which is equal to 353, denotes the total number of system calls available in the Linux kernel. When using the first feature, the system call vectors take the form $Sbin = [b_i, b_{i+1}, ..., b_N]$, where each element of the vector can take on a binary value (1 or 0) depending on whether the system call at index *i* is observed in the container trace or not. In the second case, instead of having system call vectors comprising a series of '1s' or '0s', the number of times each system call type appears is counted and add these numbers into the corresponding vector elements, resulting in system call vectors of the form $Sfreq = [f_i, f_{i+1}, ..., f_N]$. In the present invention it is referred to the first type as "binary feature" (or binary system call vectors) and will use the term "frequency feature" (or frequency system call vectors) to denote the second type.

**Box (4) refers to similarity metrics on system calls vectors.**

To address challenge B, an efficient and accurate method to match system calls to the applications (containers) producing them is desired. For this analysis, it is used the well-known Jaccard and Cosine similarity metrics in order to measure the "affinity" of system call patterns both intra-container (i.e., between multiple traces of the same container), as well as inter-container (i.e., between traces of different containers). Using both Jaccard and Cosine similarity metrics can be beneficial in certain scenarios because they capture different aspects of similarity between two sets. While both metrics are used for comparing the similarity between two sets, they are based on different principles and are suitable for different types of data, e.g., Jaccard similarity is suitable for binary data whereas the Cosine similarity is typically used for non-binary data. Ideally, for our fingerprinting attacks to be successful, it is desired the intra-container similarity to be very high, while keeping inter-container similarity as low as possible.

To compute the Jaccard similarity between two container traces, it is used the binary system call vectors whereas in the case of the Cosine similarity, the frequency system call vectors is used. More formally, the Jaccard similarity between two binary system call vectors, *Sbin* (*A*) and *Sbin* (*B*), belonging to two containers *A* and *B,* respectively, is defined by the size of the intersection of the sets divided by the size of the union, i.e.

$$Jaccard(S_{bin}(A), S_{bin}(B)) = \frac{|S_{bin}(A) \cap S_{bin}(B)|}{|S_{bin}(A) \cup S_{bin}(B)|}.$$

Similarly, the Cosine similarity is computed as the normalised dot product between two frequency system call vectors *Sfreq* (*A*) and *Sfreq* (*B*), and thus can be represented as:

$$Cosine(A, B) = \frac{S_{freq}(A) \cdot S_{freq}(B)}{|S_{freq}(A)||S_{freq}(B)|}.$$

In both cases, the obtained similarity can take a value in the range of [0,1], where 0 indicates that the two sets are completely different, and 1 that the two sets are equal.

**Box (5) refers to feature importance.** As explained, each container image is represented by a system calls vector (binary or frequency of system calls) along with its class. This system call vector is the set of features to be analysed by the ML model. For both types of vectors, the number of features initially considered is 353 (the number of system calls currently supported by the Linux kernel). However, not all features are equally important. To reduce noise and make the ML model more generalisable, it is performed a feature importance analysis to identify which features contribute more to the ML model.

For this purpose, the dataset of 149 containers is randomly split into two subsets: 70% for training and 30% for testing purposes. Then, a typical Random Forest (RF) classifier with 100 trees is trained, with tree depth in the range [11, 22] and number of features per tree in the range [110, 117]. By leveraging the attribute feature_importances_, computed as the mean and standard deviation of the cumulative decrease in impurities within each RF tree, the importance of each feature in the given classification task is measured. The feature_importances_ attribute returns a value between 0 and 1 for each feature, with values closer to 1 signifying more relevant features. By using this technique, all irrelevant features (i.e., those whose feature_importances_ attribute is equal to 0) are eliminated, allowing us to significantly reduce the dimensions of our feature space to 44 important features.

**Box (6) refers to ML-based application classification.**

Having extracted the appropriate, and minimally needed features from the collected data, the next step is to investigate the feasibility of attacks that aim to infer the application running inside a confidential container. The present invention treat this as a multi-class classification problem, where the adversary first trains an ML model offline using its own container images (where each container image is a class). Due to the large number of container images available in public repositories like container repository, it is relatively straightforward for an adversary to create a dataset from which the ML model can be built (similarly to what it has been done in the present invention).

Subsequently, the adversary provides to its trained ML model a set of system calls (the aforementioned vector - binary or frequency) from the victim container (it is assumed the victim container was included in the training data), and the trained ML model must infer which container image it belongs to with highest possible accuracy.

To study this problem, it is used 3-fold cross validation and grid search across various hyper-parameters and values for five different ML classifiers including Random Forest, Neural Network, Support Vector Machine, Naive Bayes and XGBoost..e analyse the performance of each classifier, by taking into account the two types of features (binary vs. frequency). Although all models offer a fairly high accuracy, the Random Forest classifier provides the best performance. Despite the good results obtained, it is important to note that with this approach, adversaries can only gain valuable information if the sample of system calls, they use from their victim container belongs to a container that was part of the dataset used to train the adversary's ML model.

## Claims

1. Method to extract sensitive information of applications running in victims confidential containers backed by a trusted execution environment, TEE, the method performed by an adversary and comprising:

    in an offline phase:

        building a machine learning, ML model by collecting container images from one or more container repositories or by using container images owned by the adversary;
in an online phase:

capturing invoked application system calls from outside the confidential container and application system calls generated by parent process and children processes within the victim confidential containers;
processing the captured invoked application system calls to extract valuable fields to obtain two features vectors;
matching system calls to the applications producing said system calls in the victim confidential container by using the two features vectors obtained;
performing a feature importance analysis to identify features of the two features vectors to be provided to a machine learning, ML model;
providing the ML model with a set of system calls obtained from the identified features, wherein the set of system calls is associated with a victim confidential container;
identifying which container images belong to the victim confidential container with the ML model; and
performing a side-channel attack to the victim confidential container using the identified container images to extract sensitive information of applications running in the victim containers.

**2.** The method according to claim 1, wherein the step of providing to the ML model with a set of system calls comprises initially training offline the ML model with training images from other container image repositories.

**3.** The method according to claims 1 or 2, wherein the step of providing the ML with a set of system calls obtained from the two features vectors comprises using ML classifiers including Random Forest, Neural Network, Support Vector Machine, Naive Bayes and XGBoost.

**4.** The method according to any of the previous claims, wherein performing a feature importance analysis comprise using Random Forest (RF) classifier with 100 trees, with tree depth in the range [11, 22] and number of features per tree in the range [110, 117] over two subsets of confidential containers wherein a first subset comprises 70% for training of confidential containers and the second subset comprises 30% for testing purposes of confidential containers.

**5.** The method according to any of the previous claims, wherein a first feature of the two features vectors comprise a vector *Sbin* of binary values related to the presence of different types of system calls within a confidential container trace, such that *Sbin* = [b*i* , b*i*+1, ..., b*N* ], wherein N is the total number of system calls available in the kernel shared by the victims confidential containers, wherein a second feature of the two features vectors comprise a second vector *Sfreq* related to the number of times each system call appears in the confidential container trace, such that *Sf req* = [f*i*, f*i*+1, ... , f*N* ].

**6.** The method according to any of the previous claims, wherein the step of matching system calls to the applications comprises using Jaccard and Cosine similarity metrics, wherein the method comprises using the *Sbin* for Jaccard similarity between container traces A and B, such that:

$$Jaccard(S_{bin}(A), S_{bin}(B)) = \frac{|S_{bin}(A) \cap S_{bin}(B)|}{|S_{bin}(A) \cup S_{bin}(B)|}.$$

wherein the method comprises using the *Sfreq* for Cosine similarity between the container traces A and B, such that:

$$Cosine(A, B) = \frac{S_{freq}(A) \cdot S_{freq}(B)}{|S_{freq}(A)||S_{freq}(B)|}.$$

wherein the obtained similarity using Jaccard or Cosine can take a value in the range of [0,1], where 0 indicates that the container traces A and B are completely different, and 1 that the two sets are equal.

**7.** The method according to any of the previous claims, wherein the one or more container image repository comprises four types of repositories including official, verified publisher, sponsored OSS and community and the step of collecting container images comprises collecting images from the official repository.

**8.** The method according to any of the previous claims, wherein the step of collecting container images comprises for each image:
retrieving image name, description, class, operating systems and architectures where the image can be used, a command to execute the image, a command to download and produce a compressed folder for each of the collecting container images.

**9.** The method according to any of the previous claims, further comprises using the sensitive information for the detection of co-location used for launching attacks, for executing more efficient, effective, and stealthy attacks.

**10.** System that comprises a memory configured to store instructions that when executed perform the method according to claims 1 to 9 and processing mean configured to execute said instructions.

**11.** Computer readable medium storing instructions that when executed perform the method according to claims 1 to 9.

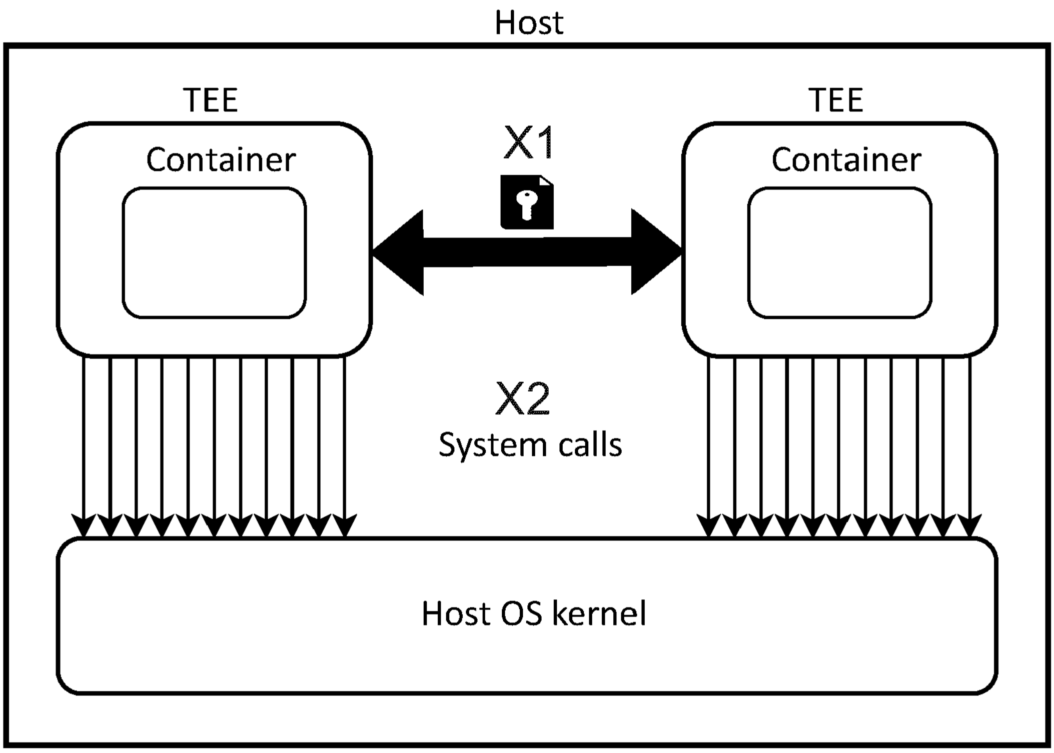
Host
TEE
Container
X1
TEE
Container
X2
System calls
Host OS kernel

FIG. 1

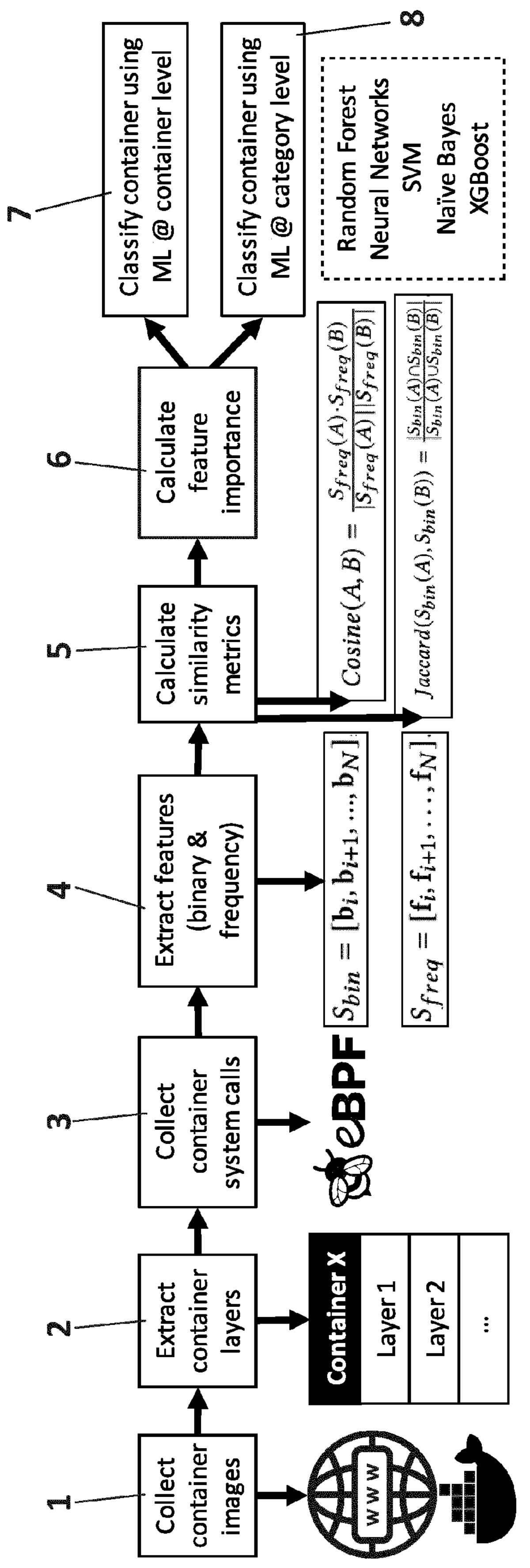
1
Collect container images
www
2
Extract container layers
Container X
Layer 1
Layer 2
...
3
Collect container system calls
eBPF
4
Extract features (binary & frequency)
$S_{bin} = [b_i, b_{i+1}, \ldots, b_N]$
$S_{freq} = [f_i, f_{i+1}, \ldots, f_N]$
5
Calculate similarity metrics
$Cosine(A,B) = \frac{S_{freq}(A) \cdot S_{freq}(B)}{|S_{freq}(A)||S_{freq}(B)|}$
$Jaccard(S_{bin}(A), S_{bin}(B)) = \frac{|S_{bin}(A) \cap S_{bin}(B)|}{|S_{bin}(A) \cup S_{bin}(B)|}$
6
Calculate feature importance
7
Classify container using ML @ container level
8
Classify container using ML @ category level
Random Forest
Neural Networks
SVM
Naïve Bayes
XGBoost

FIG. 2

Europäisches Patentamt
European Patent Office
Office européen des brevets

## DECLARATION

which under Rule 63 of the European Patent Convention shall be considered, for the purposes of subsequent proceedings, as the European search report

Application Number
EP 23 38 3346

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: The claims relate to a method, a system and a computer readable medium for performing a side-channel attack to a victim's confidential container backed by a trusted execution environment, TEE. Such subject-matter however is considered contrary to "ordre public" or morality and thereby falls under the exception in Article 53(a) EPC (See also Guidelines G-II, 4.1 and 4.1.2). Furthermore, the description does not provide any further uses of the invention that could be considered as not falling under the exceptions of Article 53(a) EPC, e.g. a way that the invention could be used for ethical hacking, i.e. defending or protecting against such attacks. On the contrary, in multiple passages throughout the description, it is mentioned that the sole purpose of the invention is to perform a side-channel attack to a victim's confidential container backed by a trusted execution environment, TEE, in order to extract sensitive information: see e.g. page 2, lines 4-10: "The present invention challenges the promise behind confidential computing which dictates that no adversary (including the cloud provider) should be able to obtain any information about applications running within trusted execution environment (TEEs). More specifically, in the present invention the proposed method leverages information leakage in the container-host OS kernel interface to discover sensitive information about the applications running inside confidential containers.", page 3, lines 19-22: "The present invention proposes a new side-channel attack -/-- | INV.<br>G06F21/53<br>G06F21/55<br>H04L9/00 |

2

| Place of search | Date | Examiner |
|---|---|---|
| The Hague | 2 July 2024 | Voukas, Ioannis |

EPO FORM 1504 (P04F37)

Europäisches Patentamt
European Patent Office
Office européen des brevets

## DECLARATION

which under Rule 63 of the European Patent Convention shall be considered, for the purposes of subsequent proceedings, as the European search report

Application Number
EP 23 38 3346

The Search Division considers that the present application, does not comply with the provisions of the EPC to such an extent that it is not possible to carry out a meaningful search into the state of the art on the basis of all claims

CLASSIFICATION OF THE APPLICATION (IPC)

Reason:

targeting confidential computing that enables adversaries to discover sensitive information about an application running inside a container backed by a TEE, by leveraging its interactions with the "outside world"." and page 10, lines 23-25: "In one example, the method comprises using the sensitive information for the detection of co-location used for launching attacks, for executing more efficient, effective, and stealthy attacks.". It is therefore clear that the side-channel attack on a victim's confidential container is not just a mere possibility of abuse of the invention (See Guidelines G-II, 4.1), but rather its intended purpose. Thus, the description does not provide any basis for the invention to be used in a non-offensive manner (i.e. in view of Guidelines G-II 4.1.2).

In view of the above objection under Article 53(a) EPC regarding the subject-matter of the entire claim set and since the description does not provide any way of overcoming said objection, the subject-matter of the entire claim set has to be excluded from the search (see Guidelines B-III 3.11), which is therefore considered not possible to be performed.

In reply to the invitation to file a statement indicating the subject-matter to be searched, the applicant failed to provide the requested information in due time.

The applicant's attention is drawn to the fact that a search may be carried out during examination following a declaration

2

-/--

EPO FORM 1504 (P04F37)

| Place of search | Date | Examiner |
| --- | --- | --- |
| The Hague | 2 July 2024 | Voukas, Ioannis |

page 2 of 3

Europäisches Patentamt
European Patent Office
Office européen des brevets

## DECLARATION

which under Rule 63 of the European Patent Convention shall be considered, for the purposes of subsequent proceedings, as the European search report

Application Number
EP 23 38 3346

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>of no search under Rule 63 EPC, should the problems which led to the declaration being issued be overcome (see EPC Guideline C-IV, 7.3). | |

2

EPO FORM 1504 (P04F37)

| Place of search | Date | Examiner |
|---|---|---|
| The Hague | 2 July 2024 | Voukas, Ioannis |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **X. GAO** ; **Z. GU** ; **M. KAYAALP** ; **D. E. PENDARAKIS** ; **H. WANG**. ContainerLeaks: Emerging Security Threats of Information Leakages in Container Clouds. *Annual IEEE/IFIP International Conference on Dependable Systems and Networks (DSN)*, 2017, 237-248
- **L. WANG** ; **M. LI** ; **Y. ZHANG** ; **T. RISTENPART** ; **M. SWIFT**. Peeking Behind the Curtains of Serverless Platforms. *USENIX Annual Technical Conference (USENIX ATC)*, 2018, 133-146